# EUROPÄISCHE PATENTSCHRIFT

(11) **EP 1 559 494 B1**
(45) Veröffentlichungstag und Bekanntmachung des Hinweises auf die Patenterteilung: **24.10.2012**
(21) Anmeldenummer: 05000194.0
(22) Anmeldetag: 07.01.2005
(51) Int. Cl.: B23G 5/10, B23B 29/24

(54) **Vorrichtung zur Bearbeitung von Rohrenden, insbesondere zum Schneiden von Gewindeanschlüssen**
Device for machining the ends of tubes, especially for cutting threaded connections
Dispositif d'usinage d'extrémités de tubes, en particulier pour l'usinage des connexions filetées

(30) Priorität: 29.01.2004 DE 102004004498
(43) Veröffentlichungstag der Anmeldung: 03.08.2005
(73) Patentinhaber: SMS Meer GmbH, 41069 Mönchengladbach (DE)
(72) Erfinder: Esser, Karl-Josef, 41179 Mönchengladbach (DE)
(74) Vertreter: Grosse, Wolf-Dietrich Rüdiger

(56) Entgegenhaltungen:
- EP-A- 0 525 406
- DE-A1- 4 428 049
- DE-A1- 4 438 818
- DE-A1- 10 133 856
- DE-A1- 19 531 837

## Beschreibung

Die Erfindung betrifft eine Vorrichtung zur Bearbeitung von Rohrenden, insbesondere zum Schneiden von Gewindeanschlüssen, bei der die Werkzeuge radial zum Rohr anstellbar in einem Werkzeugkopf verschiebbar angeordnet sind, der koaxial um das fest eingespannte Rohrende rotiert, wobei die Anstellung der in als Schieber ausgebildeten Werkzeughaltern eingespannten Werkzeuge gegenüber dem Rohr über achsparallel zum Rohr und über dessen Umfang gleichmäßig verteilt angeordneten Bewegungsmitteln erfolgt, deren dem Rohrende ferne Enden an einem gemeinsamen koaxial zur Werkzeugkopfachse verschiebbaren Rahmen angelenkt sind und deren andere Endbereiche über Verzahnungen mit an den Schiebern angeordneten Zahnstangen in Wirkverbindung stehen, über die die achsparallele Vorschubbewegung der Bewegungsmittel in eine synchrone radiale Verschiebebewegung der Schieber zur Anstellung der Schneidwerkzeuge umsetzbar ist, wobei weitere Zahnstangen benachbarter Schieber außerdem gemeinsam mit einem Zahnrad kämmen.

Eine solche Vorrichtung zur Bearbeitung von Rohrenden ist durch die DE 44 38 818 A1 bekanntgeworden. Das Rohrgewinde wird in der Regel bei einmaligem Überfahren der Werkzeuge über das Rohrende hergestellt, wobei die Bewegungen der Werkzeuge numerisch gesteuert werden. Die Maschinen sind so ausgelegt, daß besonders enge Gewindetoleranzen erreichbar sind. Eine besondere Bedeutung kommt bei diesen Maschinen dem eigentlichen Werkzeugkopf zu, in dem die das Gewinde oder auch eine Andrehung des Rohres erzeugenden Werkzeuge gegen das Rohr anstellbar geführt sind. Das Rohr selbst wird in eine definierte Lage zur Maschine gebracht und der Werkzeugvorschub eingeschaltet, sobald das Rohrende seine exakte Lage erreicht hat.

Die Bearbeitungswerkzeuge sind am Werkzeugkopf gleichmäßig am Umfang verteilt verschiebbar angeordnet, wobei die Zahl der verwendeten Werkzeuge zwar beliebig ist, doch in den meisten Fällen sechs Werkzeuge vorgesehen sind, von denen jeweils drei um 120° versetzte Werkzeuge gleichläufig und die anderen drei um 120° versetzten Werkzeuge synchronisiert gegenläufig dazu bewegt werden. Das geschieht durch die zentralen Zahnräder, mit denen die Zahnstangen der Schieber kämmen. Bei den hohen Drehzahlen des Werkzeugkopfes von beispielsweise 1000 U/min entstehen sehr hohe Fliehkräfte an den beweglichen Massen, die den möglichst klein zu haltenden Vorschubkräften der exakt zu positionierenden Werkzeuge entgegenwirken. Die mit den Schiebern kämmenden Zahnräder, ausgeführt als Stirnzahnräder, dienen daher auch gleichzeitig zum Fliehkraftausgleich. Ein kompletter Fliehkraftausgleich liegt allerdings nur dann vor, wenn die Schieber ihre Mittelstellung einnehmen, d.h. in lediglich einer Zwischen-Anstellposition.

Um eine Kompensation zu haben, wenn die Schieber aufgrund der radialen Zustellung nicht mehr denselben radialen Abstand von der Rotationsachse einnehmen, so daß die auf sie wirkenden Fliehkräfte nicht mehr gleich groß sind und sich nicht mehr ausgleichen, ist es aus der DE 101 33 856 A1 für eine Vorrichtung der eingangs genannten Art bekannt, eine zusätzliche Ausgleichseinrichtung vorzusehen. Diese besteht aus einem keulenförmigen Ausgleichsgewicht mit einer Verzahnung, die mit einem Zahnrad kämmt, das mit einer Zahnstange eines ersten Schiebers in Eingriff ist. Mit dem keulenartigen Ausgleichsgewicht kann allerdings das Gegenmoment nur durch eine relativ geringe Auslenkung erfolgen. Größere Differenzfliehkräfte an dem nicht mit dem Ausgleichsgewicht kämmenden, anderen Schieber können nur mit einem Gegenmoment über den ersten Schieber und das zentrale, zwischen den beiden Schiebern angeordnete Zahnrad zum Ausgleich kommen. Eine Alternative sieht vor, dass das Ausgleichsgewicht mit dem Zahnrad gekoppelt oder in dieses integriert ist.

Der Erfindung liegt daher die Aufgabe zugrunde, eine Vorrichtung der eingangs genannten Art zu schaffen, die einen Fliehkraftausgleich bei jeder Schieberposition ermöglicht.

Diese Aufgabe wird erfindungsgemäß mit den im kennzeichnenden Teil des Patentanspruchs angegebenen Merkmalen gelöst.

Mit dem solchermaßen in das Zahnrad integrierten Differentialgetriebe läßt sich erreichen, daß trotz des nur kleinen Drehwinkels des Zahnrades ein mehrfach größerer Verstellwinkel - konstruktiv abhängig von der Übersetzung im Differentialgetriebe - am Zentralrad mit dem Ausgleichsgewicht vorliegt. Damit werden die Differenzfliehkräfte an beiden Schiebern direkt vom zentralen, gemeinsamen Zahnrad ausgeglichen. Hierbei erzeugt das Ausgleichsgewicht, für das zudem eine geringe Masse ausreichend ist, eine Fliehkraft mit einem großen Radius zur Drehmitte, wobei das entstehende Gegenmoment außerdem über das Planeten- bzw. Differentialgetriebe noch verstärkt wird. Diese Systematik mit direktem Ausgleich ermöglicht daher eine Kompensation der Differenzfliehkräfte weitestgehend bei allen Schieberstellungen und Drehzahlen. An den Schiebern ergeben sich folglich geringe Verstellkräfte, so daß die Schieber mit hoher Genauigkeit verfahren und positioniert werden können.

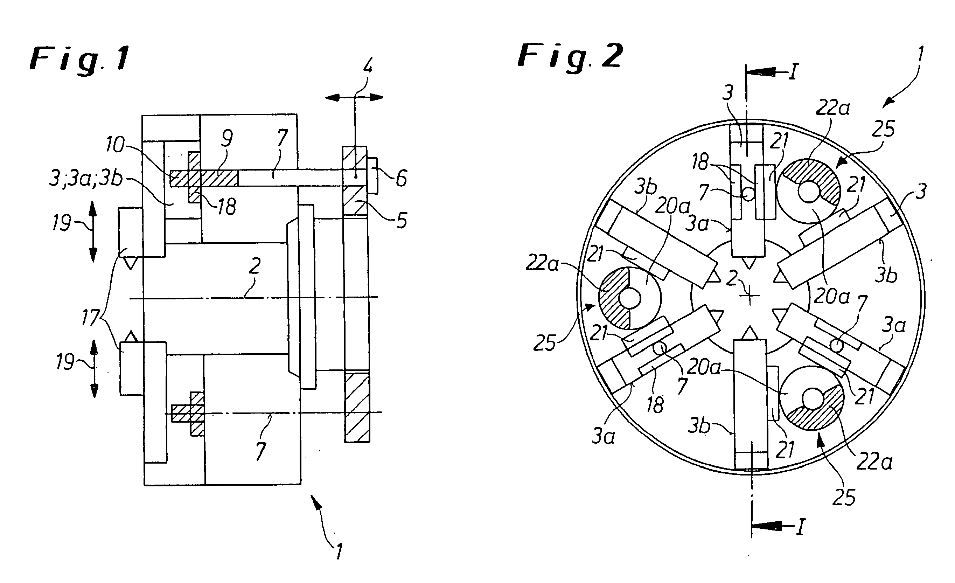

Weitere Merkmale und Vorteile der Erfindung ergeben sich aus den Ansprüchen und der nachfolgenden Beschreibung von in den Zeichnungen dargestellten Ausführungsbeispielen der Erfindung, wobei es sich bei den Ausführungsbeispielen der Fig. 1 sowie 2 und 4 nicht um einen Teil der Erfindung, sondern um Beispiele handelt, die das Verständnis der Erfindung erleichtern. Es zeigen;
- Fig. 1: als Einzelheit einer nicht dargestellten Maschine zur Bearbeitung von Rohrenden In einer schematischen Seitenansicht im Schnitt entlang der Linie I-I von Fig. 2 deren Werkzeugkopf:
- Fig. 2: In der Vorderansicht eine Ausführung des Werkzeugkopfes, bei dem ein einen integrierten Gewlchtausgleich aufweisendes, zentrales Zahnrad mit Zahnstangen benachbarter Schieber kämmt;
- Fig. 3: in der Vorderansicht wie zuvor nach Fig. 2 einen Werkzeugkopf mit für benachbarte Schieber gemeinsamen, zentralen Zahnrad, demgegenüber in einer Ausführung mit in den zentralen Zahnrädern in Form eines Differentialgetriebes integriertem Gewichtsausgleich;
- Fig. 4: in der Vorderansicht eine andere Ausführung eines Werkzeugkopfes mit einem jedem Schieber zugeordnetem und mit einem Gegengewicht versehenem Zahnrad; und
- Fig. 5: einen Schnitt durch ein zentrales Zahnrad mit integriertem Differentialgetriebe entlang der Linie V - V von Fig. 3.

Bei einem in den Fig. 1 und 2 dargestellten Werkzeugkopf 1 sind um dessen Werkzeugkopfachse 2 die Werkzeugträger in Form von Schiebern 3 bzw. 3a, 3b geichmäßig verteilt angeordnet.

Über einen in Richtung des Doppelpfeils 4 verschiebbaren Rahmen 5 sind mit ihren Enden am Rahmen 5 im Anlenkpunkt 6 befestigte Schubstangen 7 gleichzeitig synchron in Längsrichtung (vgl. den Doppelpfeil 4) verschiebbar. Die Schubstangen 7 sind im Bereich ihrer freien Enden 9 mit Schrägverzahnungen 10 versehen, die mit Zahnstangen 18 der Schieber 3 bzw. 3a, 3b kämmen. Wie aus Fig. 2 zu erkennen ist, sind am Umfang des Werkzeugkopfes 1 hier verteilt drei Schubstangen 7 als Bewegungsmittel, alternativ könnten es Gewindespindeln sein, vorgesehen, die an gegenüberliegenden Seiten mit den Zahnstangen 18 der Schieber 3 bzw. 3a, 3b in Eingriff sind. Eine Axialbewegung der Schubstangen 7 in Pfeilrichtung 4 bewirkt infolge der Verzahnung eine Bewegung der Schieber 3 bzw. 3a, 3b mit den von diesen getragenen Werkzeugen 17 in Richtung des Doppelpfeils 19 (vgl. Fig. 1).

Um einen vollständigen Fiehkraftausgleich auch in von der in Fig. 1 dargestellten Mitteletellung der Schieber 3 bzw. 3a, 3b abweichenden Positionen zu ermöglichen, sind die zwischen benachbarten Schiebern 3a und 3b angeordneten, mit Zahnstangen 21 der Schieber 3a bzw. 3b kämmenden zentralen Zahnräder 20a jeweils mit einem integrierten Gewichtsausgleich 25 ausgebildet, und zwar in dieser Ausführung in Form von halbkreissegmentartigen Gegengewichten 22a. Beim Verfahren beispielsweise der Schieber 3a nach innen und damit gegenläufigem Verfahren der Schieber 3b nach außen, werden durch die gegenläufige Bewegungskopplung über die Zahnräder 20a gleichzeitig die einseitigen Gegengewichte 22a so verlagert, daß die an den zurückfahrenden Schiebern 3b gegenüber der Fliehkraft der nach innen fahrenden Schieber 3a sehr viel größere Fliehkraft zuverlässig in allen Stellungen der Schieber ausgeglichen wird.

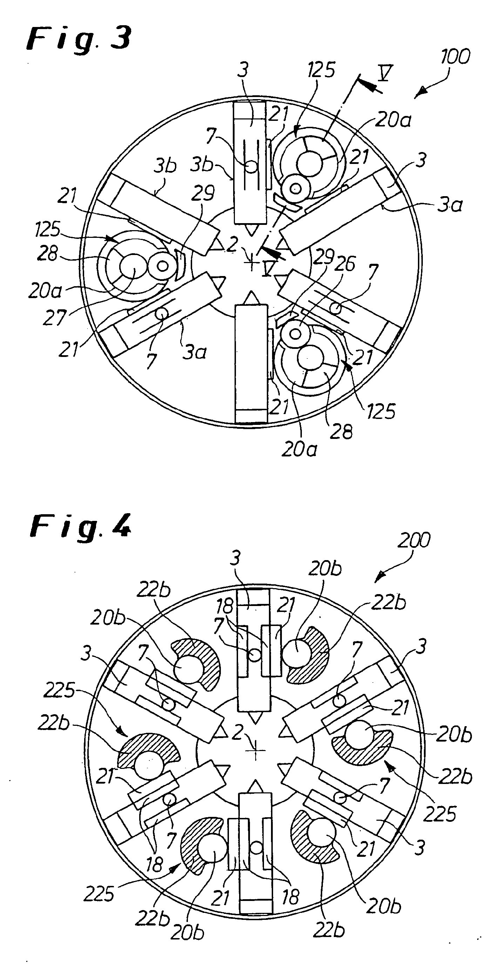

Eine in Fig. 4 dargestellte weitere Ausführung eines Werkzeugkopfes 200 weist sowohl für seine drei sich nach innen als auch damit einhergehend zwangsweise drei nach außen bewegenden Schieber 3 umfangsverteilt angeordnete, mit dem verschiebbaren Rahmen 5 befestigte Schubstangen (alternativ Gewindespindeln) 7 auf, die an ihren vorderen, freien Enden mit den ihnen zugewandten Zahnstangen 18 der Schieber 3 kämmen. Jedem der sechs Schieber 3 ist ein separates Zahnrad 20b zugeordnet, das in seinem Durchmesser sehr viel kleiner ist als die zuvor für die Kopplung von benachbarten Schiebern eingesetzten Zahnräder 20a. Diese Zahnräder 20b greifen einerseits in die in den Schiebern 3 außerdem vorgesehenen Zahnstangen 21 ein und sind andererseits mit einem integrierten Gewichtsausgleich 225 ausgebildet. Die Zahnräder 20 b sind hierzu an der dem Zahneingriff gegenüberliegenden Seite an ihrem Außenumfang mit etwa halbkreisförmigen, segmentartigen Gegengewichten 22b versehen. Von den sich paarweise gegenüberliegenden Schiebern 3 wird bei der Anstellung jeweils einer nach innen und der andere nach außen bewegt. Die einseitig angeordneten, den sich mit stetig abnehmender Fliehkraft nach innen bewegenden Schiebern 3 zugeordneten Gegengewichte 22b bauen hierbei entsprechend geringere Gegendrehmomente auf, während durch die abhängige Drehung der sich von innen nach außen mit stetig zunehmender Fliehkraft bewegenden Schieber 3 die anderen einseitigen Gegengewichte 20b zunehmende Gegendrehmomente aufbauen, die in den äußeren Schieberendpositionen mit der dort größten Fliehkraft ein Maximum besitzen.

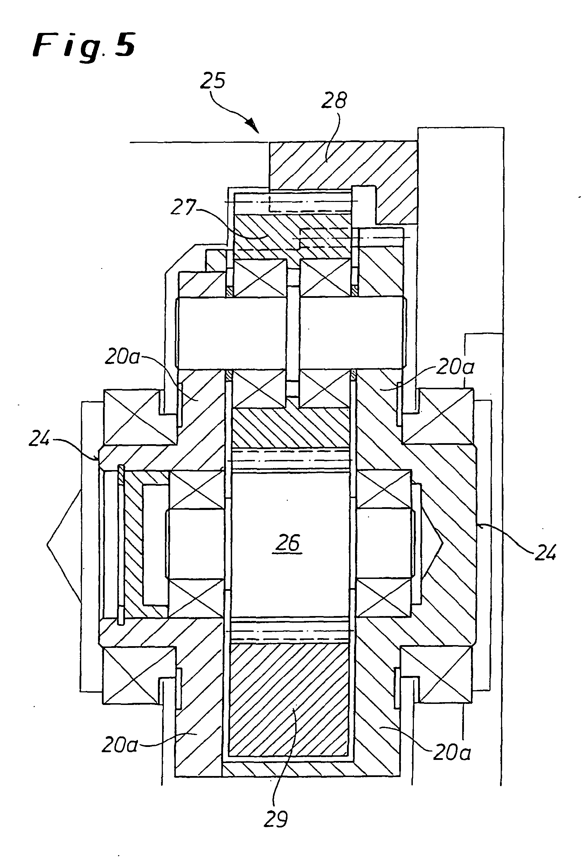

Bei der Ausführung nach Fig. 3 besitzt der Werkzeugkopf 100, wie zuvor bereits im Zusammenhang mit der Fig. 2 beschrieben, zentrale Zahnräder bzw. Stirnzahnräder 20 a, die jeweils mit den Zahnstangen 21 benachbarter Schieber 3 a, 3 b gepaart sind, und weist auch ansonsten die gleiche Bauweise auf. Unterschiedlich ist hier der integrierte Gewichtsausgleich 125, der als in die Zahnräder 20 a eingebautes Differentialgetriebe ausgebildet ist, wie näher in Fig. 5 dargestellt. Dort läßt sich ersehen, daß das Zahnrad 20 a ein gleichzeitig den Steg des Differentialgetriebes bereitstellendes Gehäuse 24 aufweist. In dem Gehäuse 24 bzw. dem Zahnrad 20 a sind ein Zentralrad 26 und ein damit kämmendes Sonnenrad 27 gelagert, das seinerseits mit einem Zahnsegment 28 im kämmenden Eingriff ist. Dem Zahnsegment 28 diametral gegenüberliegend ist an dem Zentralrad 26 des differentialgetriebes ein Ausgleichsgewicht 29 angeordnet.

Das in die Zahnräder 20 a integrierte Differentialgetriebe ermöglicht, daß eine Fliehkraft mit einem großen Radius erzeugt werden kann. Das entstehende, aufgrund der Getriebeübersetzung noch verstärkte Gegenmoment kann die Differenzfliehkräfte an beiden Schiebern 3 a, 3 b in jeder Position direkt vom zentralen Zahnrad 20 a ausgleichen.

## Patentansprüche

1. Vorrichtung zur Bearbeitung von Rohrenden, insbesondere zum Schneiden von Gewindeanschlüssen, bei der die Werkzeuge (17) radial zum Rohr anstellbar in einem Werkzeugkopf (1, 100, 200) verschiebbar angeordnet sind, der koaxial um das fest eingespannte Rohrende rotiert, wobei die Anstellung der In als Schieber (3; 3a, 3b) ausgebildeten Werkzeughaltern eingespannten Werkzeuge gegenüber dem Rohr über achsparallel zum Rohr und über dessen Umfang gleichmäßig verteilt angeordneten Bewegungsmitteln (7) erfolgt, deren dem Rohrende ferne Enden an einem gemeinsamen, koaxial zur Werkzeugkopfachse verschiebbaren Rahmen (5) angelenkt sind und deren andere Endbereiche über Verzahnungen (10) mit an den Schiebern angeordneten Zahnstangen (18) in Wirkverbindung stehen, über die die achsparallele Vorschubbewegung der Bewegungsmittel (7) In eine synchrone radiale Verschiebebewegung der Schieber (3; 3a, 3b) zur Anstellung der Werkzeuge (17) umsetzbar ist, wobei weitere Zahnstangen (21) benachbarter Schieber (3a, 3b) außerdem gemeinsam mit einem Zahnrad (20a) kämmen,
**dadurch gekennzeichnet,**
**daß** bei gemeinsam mit benachbarten Schiebern (3a, 3 b) kämmenden Zahnrädern (20a) die Zahnräder (20a) jeweils einen Steg eines Differentialgetriebes bereitstellen, das an einem Zentralrad (26) ein Ausgleichsgewicht (29) aufweist, wobei die Zahnräder (20 a) mit einem Gehäuse (24) als Steg ausgebildet sind, wobei In dem Gehäuse (24) das Zentralrad (26) und ein damit kämmendes Sonnenrad (27) gelagert sind, das mit einem zu dem Ausgleichsgewicht (29) diametral vorgesehenen Zahnsegment (28) kämmt.

## Claims

1. A device for processing tube ends, particularly for cutting threaded connections, in which the tools (17) are displaceably arranged in a tool head (1, 100, 200) that coaxially rotates about the rigidly clamped tube end such that the tools can be radially adjusted relative to the tube, wherein the tools are clamped in tool holders that are realized in the form of slides (3; 3a, 3b) and adjusted relative to the tube by means of motive means (7) that are arranged axially parallel to the tube and uniformly distributed over its circumference, wherein the distant ends of these motive means referred to the tube end are coupled to a common frame (5) that can be displaced coaxially to the tool head axis and the other end regions of said motive means are functionally connected to racks (18) arranged on the slides by means of gear teeth (10), wherein said racks make it possible to convert the axially parallel feed motion of the motive means (7) into a synchronous radial displacement of the slides (3; 3a, 3b) in order to adjust the tools (17), and wherein other racks (21) of adjacent slides (3a, 3b) also jointly mesh with a gearwheel (20a),
**characterized in**
**that**, when gearwheels (20a) jointly mesh with adjacent slides (3a, 3b), the gearwheels (20a) respectively form a planet carrier of a differential gear that features a counterbalance weight (29) on a planet wheel (26), wherein the gearwheels (20a) are realized with a planet carrier in the form of a housing (24), and wherein the planet wheel (26) and a sun wheel (27) that meshes with the planet wheel, as well as with a gear segment (28) provided diametrically to the counterbalance weight (29), are arranged in the housing (24).

## Revendications

1. Dispositif de traitement d'extrémités de tuyaux, notamment pour découper des raccords filetés, dans lequel les outils (17) sont disposés de manière déplaçable dans une tête d'outil (1, 100, 200) radialement par rapport au tuyau, qui tourne coaxialement autour des extrémités de tuyaux solidement encastrées, dans lequel le placement des outils encastrés dans des porte-outils conçus comme des coulisseaux (3 ; 3a, 3b) par rapport au tuyau a lieu par l'intermédiaire de moyens de mouvement (7) disposés en étant répartis uniformément sur la circonférence de celui-ci et sur des axes parallèles au tuyau, moyens dont les extrémités distantes des extrémités de tuyaux sont raccordées par des articulations à un châssis (5) commun, déplaçable coaxialement à l'axe de tête d'outil et dont les autres zones d'extrémités sont en liaison opérationnelle par l'intermédiaire de dentures (10) avec des crémaillères (18) disposées sur les coulisseaux, par l'intermédiaire desquelles le mouvement d'avance sur des axes parallèles des moyens de mouvement (7) peut être converti en un mouvement de déplacement radial synchrone des coulisseaux (3 ; 3a, 3b) afin de placer les outils (17), dans lequel des crémaillères supplémentaires (21) de coulisseaux voisins (3a, 3b) s'engrènent en outre conjointement avec un pignon (20a),
**caractérisé en ce que**
dans le cas des pignons (20a) s'engrenant avec les coulisseaux voisins (3a, 3b), les pignons (20a) fournissent respectivement un porte-pignon d'un engrenage différentiel, qui présente sur un engrenage central (26) une masse d'équilibrage (29), dans lequel les pignons (20a) sont conçus avec un logement (24) faisant office de porte-pignon, dans lequel l'engrenage central (26) et un engrenage solaire (27) s'engrenant avec celui-ci, qui s'engrène avec un segment denté (28) prévu diamétralement à la masse d'équilibrage (29) sont positionnés dans le logement (24).
